# EUROPÄISCHE PATENTSCHRIFT

(11) **EP 2 687 268 B1**
(45) Veröffentlichungstag und Bekanntmachung des Hinweises auf die Patenterteilung: **20.12.2017**
(21) Anmeldenummer: 13177106.5
(22) Anmeldetag: 18.07.2013
(51) Int. Cl.: A62B 35/04, A62B 35/00, F16F 7/00

(54) **Auslösevorrichtung für einen Falldämpfer**
Triggering device for a fall arrester
Dispositif de déclenchement pour un ralentisseur de chute

(30) Priorität: 18.07.2012 DE 102012212640
(43) Veröffentlichungstag der Anmeldung: 22.01.2014
(73) Patentinhaber: Bornack GmbH & Co. KG, 74360 Ilsfeld (DE)
(72) Erfinder: Bornack, Klaus, 74395 Mundelsheim (DE)
(74) Vertreter: Dilg, Haeusler, Schindelmann Patentanwaltsgesellschaft mbH

(56) Entgegenhaltungen:
- WO-A2-2011/127109
- DE-U1- 29 805 788
- JP-A- 2000 202 053

## Beschreibung

### Technisches Gebiet

Die vorliegende Erfindung betrifft ein System und ein Verfahren zum Abfangen eines Falls einer zu sichernden Person.

### Hintergrund der Erfindung

Für Reinigungs- und Wartungsarbeiten sind an höheren Bauwerken oftmals Sicherungsseile angeordnet, woran eine Sicherungsvorrichtung zum Sichern einer Person verschiebbar bzw. mitlaufend geführt ist. Die Sicherungsvorrichtung ist mit einem, von der zu sichernden Person getragenem Gurtgeschirr verbindbar, so dass diese gegen einen Absturz gesichert ist. Beim Auf- bzw. Abstieg entlang des Seils folgt die Sicherungsvorrichtung der zu sichernden Person. Das von der zu sichernden Person getragene Gurtgeschirr ist entweder direkt oder indirekt über eine Sicherungsleine mit der Sicherungsvorrichtung verbunden. Wird die Sicherungsvorrichtung mit einer größeren Kraft in Abwärtsrichtung beaufschlagt, was beispielsweise bei einem Absturz der zu sichernden Person der Fall ist, wird die Sicherungsvorrichtung an dem Seil abrupt arretiert bzw. verklemmt, wodurch sich diese erheblich verletzen kann.

Solche Sicherungsvorrichtung sind beispielhaft aus den Druckschriften WO 2011/127109 A2, JP 2000 202053 A, und DE 298 05 788 U1 bekannt.

### Darstellung der Erfindung

Es ist eine Aufgabe der vorliegenden Erfindung, ein robustes und einfaches System zum Dämpfen eines Falls einer zu sichernden Person bereitzustellen. Die Aufgabe wird durch ein System zum Abfangen eines Falls einer zu sichernden Person und durch ein Verfahren zum Abfangen eines Falls einer zu sichernden Person gemäß den unabhängigen Ansprüchen gelöst.

Gemäß einem ersten Aspekt der vorliegenden Erfindung wird ein System zum Abfangen eines Falls einer zu sichernden Person beschrieben. Das System weist eine Befestigungseinrichtung zum Befestigen der Person an einer Sicherungsvorrichtung auf. Die Sicherungsvorrichtung ist zum Sichern der Person an einem lang gestreckten Sicherungsmittel verschiebbar anbringbar. Ferner weist das System eine Abfangeinrichtung zum kontinuierlichen Abfangen eines Falls bzw. zum kontinuierlichen Verzögern einer Fallgeschwindigkeit der Person auf. Die Befestigungseinrichtung weist ein erstes Befestigungselement, welches mit der Sicherungsvorrichtung befestigbar ist, und ein zweites Befestigungselement, an welchem die Person befestigbar ist, auf. Das erste Befestigungselement ist mit dem zweiten Befestigungselement mittels einer Klemmverbindung derart gekoppelt, dass eine Zugkraft, welche das erste Befestigungselement und das zweite Befestigungselement auseinanderzieht, bis zu einem vorbestimmten Betrag zwischen der Sicherungsvorrichtung und der Person übertragbar ist. Die Abfangeinrichtung ist an dem ersten Befestigungselement und dem zweiten Befestigungselement befestigt. Die Befestigungseinrichtung ist derart ausgebildet, dass bei Überschreiten eines vorbestimmten Betrags einer Auslösekraft das erste Befestigungselement von dem zweiten Befestigungselement lösbar ist, und die Zugkraft zwischen dem ersten Befestigungselement und dem zweiten Befestigungselement von der Abfangeinrichtung übertragbar ist, um eine Fallgeschwindigkeit eines Falls der Person kontinuierlich zu verzögern und einen Fallstoß zu reduzieren.

Gemäß einer weiteren beispielhaften Ausführungsform wird ein Verfahren zum Abfangen eines Falls einer zu sichernden Person mit dem oben beschriebenem System beschrieben.

Gemäß eines weiteren Aspekts der vorliegenden Erfindung wird eine Anordnung zum Abfangen eines Falls einer zu sichernden Person bereitgestellt.

Als Sicherungsmittel kann im Rahmen der vorliegenden Anmeldung ein Seil, ein Band oder eine Haltestange beschrieben werden. An dem Sicherungsmittel wird die zu sichernde Person mittels der Sicherungsvorrichtung befestigt, wobei die zu sichernde Person mittels der Sicherungsvorrichtung entlang des Sicherungsmittels klettern kann.

Die Sicherungsvorrichtung ist zur verschieblichen Befestigung an dem Sicherungsmittel vorgesehen. Die Sicherungsvorrichtung ist beispielsweise derart ausgebildet, dass diese entlang des Sicherungsmittels entlang fahrbar ist. Die Sicherungsvorrichtung weist beispielsweise Brems- bzw. Arretiereinrichtungen auf, um bei einer bestimmten Geschwindigkeit einer Verschiebung entlang des Sicherungsmittels oder entlang einer bestimmten Richtung entlang des Sicherungsmittels arretiert zu werden. Beispielsweise blockiert bei einem Fall der Person die Sicherungsvorrichtung ein weiteres Bewegen entlang des Sicherungsmittels. Die Sicherungsvorrichtung kann ferner einen Sitzgurt oder einen Trägergurt aufweisen, mit welchen die zu sichernden Personen an einem Seil oder einem Wandhaken als Sicherungsmittel gesichert sind. Das System, d.h. die Befestigungseinrichtung und der Falldämpfer, können in der Sicherungsvorrichtung, z.B. in dem Sitzgurt oder einen Trägergurt, integriert bzw. eingenäht sein.

An die Sicherungsvorrichtung wird die zu sichernde Person über die Befestigungseinrichtung befestigt. Die Befestigungseinrichtung weist das erste Befestigungselement und das zweite Befestigungselement auf. Die beiden Befestigungselemente sind miteinander derart gekoppelt, dass eine Zugkraft insbesondere bis zu einem bestimmten Betrag direkt übertragbar ist und die Abfangeinrichtung nicht mit der Zugkraft beaufschlagt wird. Insbesondere wird bis zu einem bestimmten Betrag der Auslösekraft die Zugkraft ausschließlich über die Befestigungselemente übertragen, sofern die Auslösekraft den Betrag noch keinmal überschritten hat. Das erste Befestigungselement und das zweite Befestigungselement sind beispielsweise Schäkel, welche miteinander drehbar oder drehfest verbunden sind. Die Kopplung des ersten Befestigungselements und des zweiten Befestigungselements kann beispielsweise über ein Koppelelement, wie beispielsweise einem Verbindungsbolzen, bereitgestellt werden oder, wie weiter unten beschrieben, über einen gemeinsamen integralen Materialbereich mit einer Sollbruchstelle, so dass über die Kopplung die gesamte Zugkraft übertragen wird und kaum bzw. keine Zugkraft über die Abfangeinrichtung während der Kopplung übertragen wird.

Die Zugkraft besteht beispielsweise aus der Gewichtskraft der zu sichernden Person. Insbesondere weist die Zugkraft eine Komponente parallel zu der Gravitationsrichtung auf, in dem Falle, in welchem die zu sichernde Person entlang des Seils in Richtung Boden stürzt.

Die Auslösekraft ist diejenige Kraft, welche die Kopplung des ersten Befestigungselements und des zweiten Befestigungselements löst. Beispielsweise kann die Auslösekraft die Zugkraft sein. Ferner kann die Auslösekraft eine Kraft darstellen, welche in einer vorbestimmte Richtung wirkt um die Kopplung des ersten Befestigungselements oder des zweiten Befestigungselements zu lösen. Dabei kann die Auslösekraft in unterschiedlicher Richtung wie die Zugkraft und/oder die Gewichtskraft der Person wirken.

Zwischen dem ersten Befestigungselement und dem zweiten Befestigungselement kann beispielsweise ein Hakenverschluss bestehend aus einem Haken und einer Öse ausgebildet werden. Der Hackenverschluss kann beispielsweise die Zugkraft entlang einer ersten Richtung übertragen. Entlang einer zweiten Richtung, welche sich von der ersten Richtung unterscheidet, kann der Hakenverschluss geöffnet oder geschlossen werden, indem z.B. der Haken in die Öse einsteckbar oder aussteckbar ist. Wirkt die Auslösekraft mit dem vorbestimmten Betrag entlang der zweiten Richtung, beispielsweise orthogonal zu der ersten Richtung, entlang welcher die Zugkraft wirkt, löst sich der Haken von der Öse und die Kopplung des ersten Befestigungselements und des zweiten Befestigungselements wird gelöst.

Beispielsweise kann die Kopplung des ersten Befestigungselements und des zweiten Befestigungselements derart ausgebildet dein, dass bei Übersteigen des Betrags der Zugkraft, welche beispielhaft als Auslösekraft wirkt, und insbesondere bei Übersteigen des Betrags der Komponente der Zugkraft parallel zu der Gravitationsrichtung, die Kopplung gelöst wird bzw. das erste Befestigungselement und das zweite Befestigungselement entkoppelt wird. Die Zugkraft wird dann nicht länger direkt übertragen sondern lediglich indirekt über die Abfangeinrichtung zwischen den Befestigungselementen. Der vorbestimmte Betrag der Auslösekraft kann beispielsweise derart festgelegt werden, dass dieser Betrag die Auslösekraft beschreibt, welche bei Fall der Person auf die Befestigungseinrichtung wirkt. Der vorbestimmte Betrag der Auslösekraft berücksichtigt beispielsweise Fallrichtung und das Gewicht der Person sowie den Einschlag (Stoß), welcher auf die Befestigungseinrichtung bei einem Fall der Person mit einer bestimmten Fallgeschwindigkeit wirkt. Nachdem der vorbestimmte Betrag der Auslösekraft einmalig überschritten ist, bleiben die Befestigungselemente entkoppelt, auch wenn die Auslösekraft erneut unter den vorbestimmten Betrag fällt. Das erste und das zweite Befestigungselement können lediglich manuell durch z.B. die Person erneut gekoppelt werden, sodass erneut eine direkte Kraftübertragung der Zugkraft zwischen den Befestigungselementen ohne die Abfangeinrichtung ermöglicht ist.

Die Abfangeinrichtung nimmt die Zugkraft auf, falls die Auslösekraft den vorbestimmten Betrag überschritten hat und das erste Befestigungselement von dem zweiten Befestigungselement entkoppelt ist. Fällt die zu sichernde Person in Richtung Boden, so wirkt die gesamte Gewichtskraft als Auslösekraft auf das zweite Befestigungselement, so dass damit der vorbestimmte Betrag der Auslösekraft überschritten wird. Dadurch wird schlagartig das erste Befestigungselement von dem zweiten Befestigungselement entkoppelt. Daraufhin wird die Zugkraft komplett von der Abfangeinrichtung zwischen dem ersten Befestigungselement und dem zweiten Befestigungselement übertragen. Gleichzeitig erhöht die Abfangeinrichtung langsam deren Länge und vergrößert somit langsam den Abstand zwischen dem ersten Befestigungselement und dem zweiten Befestigungselement. Die Abfangeinrichtung reduziert insbesondere kontinuierlich die Fallgeschwindigkeit der zu sichernden Person und reduziert einen Fallstoß bis ein Maximalabstand zwischen dem ersten Befestigungselement und dem zweiten Befestigungselement erreicht ist. Die Abfangeinrichtung kann austauschbar zwischen dem ersten Befestigungselement und/oder dem zweiten Befestigungselement angeordnet sein, so dass nach Abfangen eines Sturzes gegebenenfalls eine neue, unverbrauchte Abfangeinrichtung eingesetzt werden kann.

Der Falldämpfer kann beispielsweise als elastisches Band oder als Spiralfeder ausgebildet. Ferner kann der Falldämpfer aus einer Verwebung oder einer Vernähung ausgebildet sein. Bei Übertragung der Zugkraft über den Falldämpfer lösen sich langsam und definiert nacheinander einzelne Textilfäden der Verwebung oder einzelne Nähte der Vernähung, sodass die Fallgeschwindigkeit der zu sichernden Person und der Fallstoß reduziert werden.

Die Abfangeinrichtung absorbiert und dämpft den Impakt (Fallstoß) bzw. einen sprunghaften Anstieg der Zugkraft auf die Befestigungseinrichtung bei einem Fall der zu sichernden Person. Die Abfangeinrichtung überträgt die Zugkraft, wenn der vorbestimmte Betrag der Auslösekraft schlagartig überschritten wird, so dass sich das erste Befestigungselement von dem zweiten Befestigungselement löst.

Mit der vorliegenden Erfindung wird im Normalbetrieb die Zugkraft direkt über das erste und das zweite Befestigungselement übertragen. Die Abfangeinrichtung wird im Normalbetrieb nicht mit der Zugkraft beaufschlagt. Somit wird im Normalbtrieb die Abfangeinrichtung nicht beansprucht und eine schleichende Ermüdung oder ein schleichender Verschleiß der Abfangeinrichtung wird verhindert. Die Sicherungsvorrichtung wird entlang des Sicherungsmittels durch die zu sichernde Person geführt, indem diese entlang des Sicherungsseils auf- und absteigt. Die Befestigungseinrichtung ist dabei zwischen der Sicherungsvorrichtung und der Person gekoppelt. Bei Sturz bzw. Falls der zu sichernden Person wird schlagartig eine Auslösekraft, welche im Wesentlichen in Richtung Gravitationskraft ausgerichtet ist, von der Befestigungseinrichtung auf die Sicherungsvorrichtung übertragen, worauf die Sicherungsvorrichtung am Sicherungsmittel abrupt arretiert wird, so dass ein weiteres Verschieben der Sicherungsvorrichtung entlang des Sicherungsmittels unterbunden wird. Im gleichen Moment entkoppelt sich das erste Befestigungselement von dem zweiten Befestigungselement, so dass erst dann die Zugkraft von der Abfangeinrichtung zwischen dem ersten Befestigungselement und dem zweiten Befestigungselement übertragen wird.

Die Abfangeinrichtung ist derart eingerichtet, dass der Fall der Person kontinuierlich abgefangen wird, d.h. nicht abrupt. Mit anderen Worten wird der Fall bzw. die Fallgeschwindigkeit über einen bestimmten Weg durch die Abfangeinrichtung langsam und kontinuierlich abgebremst bis die Person zum Stillstand kommt.

Aufgrund der kontinuierlichen Abbremsung des Falls mittels der Abfangeinrichtung können Verletzungen der fallenden Person verhindert werden, da diese nicht abrupt aufgefangen wird sondern in einer gedämpften und sanfteren Art und Weise.

Gemäß einer weiteren beispielhaften Ausführungsform sind das erste Befestigungselement und das zweite Befestigungselement integral ausgebildet. Zwischen dem ersten Befestigungselement und dem zweiten Befestigungselement ist eine Sollbruchstelle derart ausgebildet, dass bei Überschreiten des vorbestimmten Betrags der Auslösekraft das erste Befestigungselement von dem zweiten Befestigungselement lösbar und entkoppelbar ist. Bei einem Fall der Person wirkt schlagartig die Auslösekraft, welche höher als der vorbestimmte Betrag ist, auf die Befestigungsvorrichtung, so dass die Sollbruchstelle zwischen den Befestigungselementen bricht und beide Befestigungselemente voneinander entkoppelt sind. In diesem Fall übernimmt die Abfangeinrichtung die Kraftübertragung und bremst langsam und kontinuierlich den Fall der Person ab.

Die Sollbruchstelle kann beispielsweise über eine Einschnürung bzw. eine Reduzierung der Materialdicke zwischen dem ersten Befestigungselement und dem zweiten Befestigungselement ausgebildet sein. Das erste Befestigungselement und das zweite Befestigungselement bilden sozusagen entsprechend einen ersten und einen zweiten Bereich eines monolithischen Bauteils. Das monolithische Bauteil weist beispielsweise Kunststoff oder Metall auf. Die Sollbruchstelle zwischen dem ersten Befestigungselement und dem zweiten Befestigungselement kann beispielsweise durch einen weicheren Materialbestandteil ausgebildet sein oder durch geometrische Vorkehrungen, wie z.B. durch Einschnürungen. Beispielsweise kann das monolithische Bauteil mittels partiellen Formhärteverfahren hergestellt werden.

Gemäß einer weiteren beispielhaften Ausführungsform weist die Befestigungseinrichtung einen Verbindungsbolzen mit einem ersten Ende und einem gegenüberliegenden zweiten Ende auf. Das erste Ende ist mit dem ersten Befestigungselement gekoppelt und das zweite Ende ist mit dem zweiten Befestigungselement gekoppelt. Bei Überschreiten des vorbestimmten Betrags der Auslösekraft ist der Verbindungsbolzen von zumindest dem ersten Befestigungselement oder dem zweiten Befestigungselement lösbar bzw. entkoppelbar, so dass dadurch das erste Befestigungselement von dem zweiten Befestigungselement entkoppelt ist. Der Verbindungsbolzen kann beispielsweise aus Metall oder Kunststoff bestehen. Ferner kann der Verbindungsbolzen drehbar an zumindest dem ersten Befestigungselement und/oder dem zweiten Befestigungselement befestigt sein. Dadurch kann eine relative Verdrehung des ersten Befestigungselements relativ zu dem zweiten Befestigungselement bereitgestellt werden. Somit wird eine höhere Bewegungsfreiheit der Person, welche mittels der Befestigungseinrichtung an das Sicherungsmittel gekoppelt ist, bereitgestellt werden.

Gemäß einer weiteren beispielhaften Ausführungsform weist der Verbindungsbolzen eine weitere Sollbruchstelle auf, welche derart ausgebildet ist, dass bei Überschreiten des vorbestimmten Betrags der Auslösekraft das erste Befestigungselement von dem zweiten Befestigungselement lösbar bzw. entkoppelbar ist.

Die weitere Sollbruchstelle kann beispielsweise eine Einschnürung aufweisen oder aus einem weicheren Material des Verbindungsbolzens hergestellt sein.

Ferner kann der Verbindungsbolzen einen Formschluss mit dem ersten Befestigungselement und/oder dem zweiten Befestigungselement ausbilden. Der Formschluss ist derart ausgebildet, dass bei Überschreiten des vorbestimmten Betrags der Auslösekraft der Formschluss aufgelöst werden kann. Beispielsweise weist der Bolzen ein (Innen-/oder Außen-) Gewinde auf und ist in ein entsprechendes (Innen-/oder Außen-) Gewinde des Befestigungselements eingeschraubt. Ferner kann der Verbindungsbolzen mit dem ersten Befestigungselement und/oder dem zweiten Befestigungselement entsprechend verklebt oder verschweißt sein, wobei sich die Verklebung oder die Verschweißung definiert ab Überschreitens des vorbestimmten Betrags der Auslösekraft löst.

Der Verbindungsbolzen kann ebenfalls austauschbar sein, sodass nach Abfangen eines Sturzes gegebenenfalls ein neuer, unverbrauchter Verbindungsbolzen eingesetzt werden kann. Das erste Befestigungselement und das zweite Befestigungselement sind mittels einer Klemmverbindung derart miteinander gekoppelt, dass bei Überschreiten des vorbestimmten Betrags der Auslösekraft das erste Befestigungselement von dem zweiten Befestigungselement entkoppelt. Beispielsweise kann das erste Befestigungselement und das zweite Befestigungselement mittels einer Presspassung, d.h. mittels einer kraftschlüssigen bzw. reibschlüssigen Verbindung miteinander befestigt werden. Nach Überschreiten des vorbestimmten Betrags der Auslösekraft entkoppelt sich das erste Befestigungselement von dem zweiten Befestigungselement und die Abfangeinrichtung wird aktiv.

Gemäß einer weiteren beispielhaften Ausführungsform weist das erste Befestigungselement oder das zweite Befestigungselement einen gabelförmigen Abschnitt auf, wobei das entsprechend andere erste Befestigungselement oder zweite Befestigungselement einen Klemmbolzen aufweist. Der Klemmbolzen ist zur Ausbildung der Klemmverbindung in dem gabelförmigen Abschnitt einklemmbar.

Der Klemmbolzen kann beispielsweise lösbar und somit austauschbar an dem ersten oder an dem zweiten Befestigungselement angeordnet werden. Ferner kann der Klemmenbolzen integral mit dem ersten oder dem zweiten Befestigungselement ausgebildet werden.

Der gabelförmige Abschnitt des ersten oder zweiten Befestigungselements weist die Form einer Hülse auf, wobei entlang der Längsachse der Hülse ein Spalt den gabelförmigen Abschnitt in eine erste Teilschale und in eine zweite Teilschale trennt. Aufgrund des Spalts weist der gabelförmige Abschnitt ein offenes Profil auf. Im Inneren des gabelförmigen Abschnitts kann der Klemmbolzen eingeklemmt werden, um die Klemmverbindung bereitzustellen. Bei Überschreiten des vorbestimmten Betrags der Auslösekraft verformt sich der gabelförmige Abschnitt derart, dass der gabelförmige Abschnitt aufgrund der Zugkraft des Klemmbolzens aufgebogen wird, d.h. dass sich die erste Teilschale von der zweiten Teilschale entfernt, bis der Spalt derart groß ist, dass der Klemmbolzen durch den Spalt aus dem gabelförmige Abschnitt herausrutscht. Der Klemmbolzen ist dann von dem gabelförmigen Abschnitt entkoppelt. Entsprechend ist dann das erste Befestigungselement von dem zweiten Befestigungselement entkoppelt.

Der gabelförmige Abschnitt kann dabei elastisch oder plastisch verformbar ausgebildet sein. Diesbezüglich kann der gabelförmige Abschnitt beispielsweise aus einem harten Kunststoffmaterial hergestellt werden, aus einem weicheren, elastisch verformbaren Kunststoffmaterial oder einem entsprechend elastisch verformbaren metallischen Material hergestellt werden.

Alternativ kann der gabelförmige Abschnitt ebenfalls als geschlossene Hülse ausgebildet sein, wobei der Klemmbolzen mittels einer Presspassung in der geschlossenen Hülse, welche dann sozusagen eine Buchse ausbildet, befestigt ist. Die geschlossene Hülse ist derart ausgerichtet, dass die Längsachse der Hülse und entsprechend die Längsachse (Mittelachse) des Klemmbolzens mit zumindest einer Komponente parallel zu der Auslösekraft F ist. Bei Überschreiten des vorbestimmten Betrags der Auslösekraft wird der Klemmbolzen dann entlang der Längsrichtung der geschlossenen Hülse aus dieser herausgezogen.

Die Abfangeinrichtung kann dabei einerseits an den gabelförmige Abschnitt gekoppelt werden und andererseits an den Klemmbolzen. Nach Entkopplung des Klemmbolzens aus dem gabelförmigen Abschnitt, findet eine Kraftübertragung zwischen dem Klemmbolzen und dem gabelförmigen Abschnitt ausschließlich über die Abfangeinrichtung statt.

Gemäß einer weiteren beispielhaften Ausführungsform weist die Abfangeinrichtung ein elastisches Element auf. Das elastische Element kann beispielsweise ein Gummiband oder eine Spiralfeder sein. Mittels des elastischen Elements kann die Zugkraft bei Fall der Person kontinuierlich abgebremst und gedämpft werden, bis der Fall der Person gestoppt ist.

Gemäß einer weiteren beispielhaften Ausführungsform weist die Abfangeinrichtung ein plastisch verformbares Element auf.

Ein plastisch verformbares Element kann beispielsweise unter der Zugkrafteinwirkung irreversibel verformt werden, bis der Fall der Person kontinuierlich abgefangen ist. Das plastisch verformbare Element bleibt nach Beendigung des Falls in der entsprechenden Form irreversibel. Beispielsweise ist das plastisch verformbare Element aus Metall und verbiegt sich aufgrund der Übertragung der Zugkraft in einer definierten Art und Weise, so dass während der Verbiegung eine Dämpfung des Falls erzeugt wird.

Gemäß einer weiteren beispielhaften Ausführungsform weist die Abfangeinrichtung ein Dämpfungsband mit einem ersten Abschnitt und einem zweiten Abschnitt auf. Der erste Abschnitt ist mit dem ersten Befestigungselement gekoppelt und der zweite Abschnitt ist mit dem zweiten Befestigungselement gekoppelt. Der erste Abschnitt ist mit dem zweiten Abschnitt derart entlang eines Verbindungsabschnitts befestigt, dass bei Übertragung der Zugkraft mittels des Dämpfungsbandes die Befestigung entlang des Verbindungsabschnitts kontinuierlich über eine bestimmte Zeitdauer lösbar ist, so dass sich die Länge des Dämpfungsbandes kontinuierlich und langsam verlängert, bis ein Fall der Person kontinuierlich abgefangen wird. Die Befestigung entlang des Verbindungsabschnitts kann beispielsweise als stoffliche Befestigung (z.B. Klebeverbindung) ausgebildet sein. Ferner kann die Befestigung entlang des Verbindungsabschnitts mittels einer Naht, mittels Schweißens oder mittels eines Klettverschlusses ausgebildet sein.

In dem Fall, dass der vorbestimmte Betrag der Auslösekraft überschritten worden ist und die Zugkraft über die Abfangeinrichtung übertragen wird, wird die Zugkraft zwischen einem ersten und einem zweiten Abschnitt übertragen. Dadurch löst sich die Verbindung (z.B. die Verklebung) zwischen dem ersten Abschnitt und dem zweiten Abschnitt über einen bestimmten Zeitraum. Die Festigkeit der Verbindung (z.B. Verklebung oder Nahtverbindung) ist derart ausgewählt, dass bei einem entsprechenden Betrag der Auslösekraft (welcher Betrag beispielsweise aufgrund einer zu sichernden Person zwischen 60 kg (ca. 588N) und 100 kg (980N) resultiert) die Verbindung langsam und kontinuierlich gelöst wird, so dass sich der erste Abschnitt langsam von dem zweiten Abschnitt löst, bis die Fallgeschwindigkeit kontinuierlich verzögert und der Fall der Person gestoppt ist. Nach vollständigem Lösen des ersten Abschnitts von dem zweiten Abschnitt entlang des Verbindungsabschnitts ist das Dämpfungsband voll abgewickelt. Das Dämpfungsband kann ein elastisches Dämpfungsband sein oder ein starres Dämpfungsband, welches keine elastischen Eigenschaften aufweist.

Gemäß einer weiteren beispielhaften Ausführungsform kann die Abfangeinrichtung eine Schutzhülle aufweisen, welche das Dämpfungsband einhüllt. Bei Übertragung der Zugkraft mittels des Dämpfungsbandes reißt die Schutzhülle auf und gibt das Dämpfungsband frei. Mittels der Schutzhülle wird eine ungewollte Beschädigung, welche beim Klettern der Person entlang des Sicherungsmittels vorkommen kann, verhindert.

Gemäß einer weiteren beispielhaften Ausführungsform weist die Sicherungsvorrichtung einen Bremshebel auf, welcher drehbar an einem Grundkörper der Seilsicherungsvorrichtung befestigbar ist. An einem ersten Ende des Bremshebels ist ein Koppelbereich zur Ankopplung der Befestigungseinrichtung ausgebildet und an einem zweiten Ende des Bremshebels, welcher gegenüber dem ersten Ende ausgebildet ist, ist ein Klemmbereich ausgebildet. Der Bremshebel ist derart drehbar an dem Grundkörper angeordnet, dass der Klemmbereich in Richtung des Sicherungsmittels bewegbar ist, damit eine Verklemmung des Sicherungsmittels zwischen der Sicherungsvorrichtung und dem Bremshebel erzeugbar ist. Der Bremshebel ist insbesondere um eine Drehachse drehbar an dem Grundkörper befestigt. Ferner ist der Bremshebel insbesondere derart drehbar an dem Grundkörper befestigt, dass bei einem Zug in einer im Wesentlichen vertikalen Richtung (z.B. in einer Richtung parallel zur Längsachse) eine Drehung des Bremshebels initiiert wird, bis der Klemmbereich so weit in Richtung Sicherungsmittel bewegt ist, dass das Sicherungsmittel verklemmt wird.

Mittels der Anordnung des Bremshebels wird ein weiterer Sicherungsmechanismus eingeführt, so dass bei Sturz der zu sichernden Person ein vertikaler Zug in Richtung Gravitationskraft automatisch und selbsttätig, d.h. ohne Einwirkung der zu sichernden Person, eine Verklemmung der Sicherungsvorrichtung an dem Sicherungsmittel erfolgt. Damit wird ein Sturz der zu sichernden Person aufgefangen, ohne dass diese aktiv die Sicherungsvorrichtung, bzw. den Bremshebel, bedient.

Es wird darauf hingewiesen, dass die hier beschriebenen Ausführungsformen lediglich eine beschränkte Auswahl an möglichen Ausführungsvarianten der Erfindung darstellen. So ist es möglich, die Merkmale einzelner Ausführungsformen in geeigneter Weise miteinander zu kombinieren, so dass für den Fachmann mit den hier expliziten Ausführungsvarianten eine Vielzahl von verschiedenen Ausführungsformen als offensichtlich offenbart anzusehen sind. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieser Anmeldung sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügten Figuren näher beschrieben. Es zeigen:
Fig. 1 ein System zum Abfangen eines Falls einer zu sichernden Person gemäß einer beispielhaften Ausführungsform der vorliegenden Erfindung, wobei eine Zugkraft direkt zwischen dem ersten Befestigungselement und dem zweiten Befestigungselement übertragen wird,
Fig. 2 ein System zum Abfangen eines Falls einer zu sichernden Person gemäß einer nicht erfindungsgemäßen Ausführungsform, wobei die Zugkraft zwischen dem ersten Befestigungselement und dem zweiten Befestigungselement von einer Abfangeinrichtung übertragen wird,
Fig. 3 eine nicht erfindungsgemäße Ausführungsform der Befestigungseinrichtung, wobei das erste Befestigungselement und das zweite Befestigungselement integral ausgebildet sind
Fig. 4 eine weitere beispielhafte Darstellung einer Anordnung zum Dämpfen eines Falls einer zu sichernden Person gemäß einer beispielhaften Ausführungsform der vorliegenden Erfindung,
Fig. 5 eine weitere beispielhafte Darstellung eines Systems zum Dämpfen eines Falls einer zu sichernden Person gemäß einer beispielhaften Ausführungsform der vorliegenden Erfindung, wobei das erste Befestigungselement und das zweite Befestigungselement mittels einer Klemmverbindung miteinander befestigt sind,
Fig. 6 eine schematische Schnittdarstellung des Systems aus Fig. 5, und
Fig. 7 und Fig. 8 schematische Darstellungen eines Entkopplungsvorgangs des Systems aus Fig. 5 und Fig. 6.

### Detaillierte Beschreibung von exemplarischen Ausführungsformen

Gleiche oder ähnliche Komponenten sind in den Figuren mit gleichen Bezugsziffern versehen. Die Darstellungen in den Figuren sind schematisch und nicht maßstäblich.

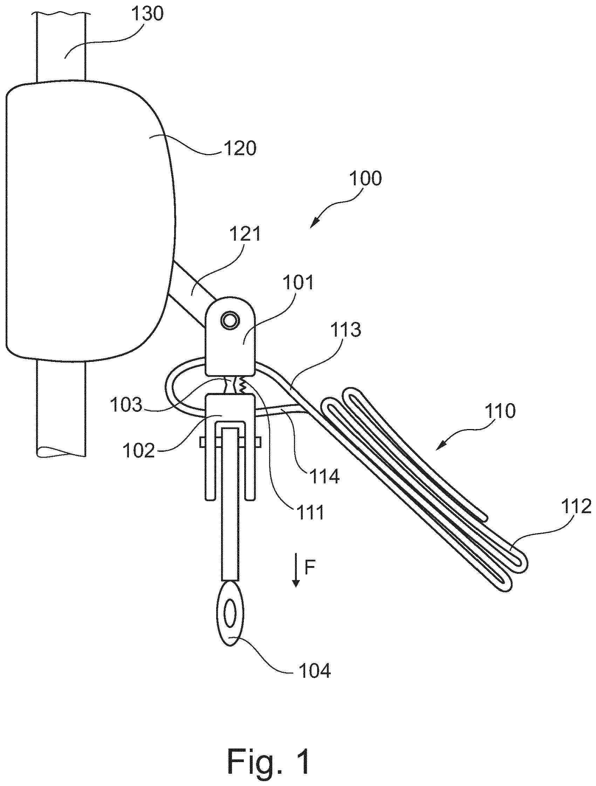

**Fig. 1** zeigt ein System 100 zum Abfangen eines Falls einer zu sichernden Person. Das System 100 weist eine Befestigungseinrichtung und eine Abfangeinrichtung 110 auf. Die Befestigungseinrichtung ist zum Befestigen der Person an einer Sicherungsvorrichtung 120 ausgebildet. Die Sicherungsvorrichtung 120 ist an einem langgestreckten Sicherungsmittel (z.B. einem Seil, Haken) zum Sichern der Person anbringbar. Die Befestigungseinrichtung weist ein erstes Befestigungselement 101, welches mit der Sicherungsvorrichtung 120 befestigbar ist, und ein zweites Befestigungselement 102 auf, an welchem die Person befestigbar ist.

Das erste Befestigungselement 101 ist mit dem zweiten Befestigungselement 102 derart gekoppelt, dass eine Zugkraft bis zu einem Überschreiten eines vorbestimmten Betrags der Auslösekraft F direkt zwischen dem ersten Befestigungselement 101 und dem zweiten Befestigungselement 102 übertragbar ist.

Die Abfangeinrichtung 110 ist zum kontinuierlichen Abfangen eines Falls der Person ausgebildet. Unter kontinuierlichem Abfangen wird ein langsames Abfangen mit einer stetigen Verzögerung der Fallgeschwindigkeit des Falls der Person verstanden und gerade kein diskontinuierliches, abruptes Abfangen. Die Abfangeinrichtung 110 ist an dem ersten Befestigungselement 101 und dem zweiten Befestigungselement 102 befestigt. Die Befestigungseinrichtung ist derart ausgebildet, dass bei Überschreiten eines vorbestimmten Betrags der Auslösekraft F das erste Befestigungselement 101 von dem zweiten Befestigungselement 102 entkoppelt wird und die Zugkraft zwischen dem ersten Befestigungselement 101 und dem zweiten Befestigungselement 102 von der Abfangeinrichtung 110 übertragen wird, um einen Fall der Person kontinuierlich abzufangen. Bei einem direkten Übertragen der Zugkraft zwischen dem ersten Befestigungselement 101 und dem zweiten Befestigungselement 102 wird keine Zugkraft über die Abfangeinrichtung 110 übertragen. Nach Entkopplung des ersten Befestigungselements 101 und des zweiten Befestigungselements 102 wird die Zugkraft indirekt über die Abfangeinrichtung 110 zwischen dem ersten Befestigungselement 101 und dem zweiten Befestigungselement 102 übertragen.

Das Sicherungsmittel, welches in Fig. 1 beispielsweise als Halteseil 130 ausgebildet ist, ist z.B. an einer Felswand oder Gebäudewand angebracht. Die Sicherungsvorrichtung 120 ist an dem Seil 130 anbringbar und entlang des Seils 130 verschiebbar. Die Sicherungsvorrichtung 120 kann derart ausgebildet sein, dass bei einer schnellen Beschleunigung oder bei einem gewissen Betrag der Zugkraft eine Arretierung zwischen der Sicherungsvorrichtung 120 und dem Halteseil 130 umgesetzt wird. Dies führt zu einem abrupten Stillstand einer relativen Bewegung zwischen dem Halteseil 130 und der Sicherungsvorrichtung 120.

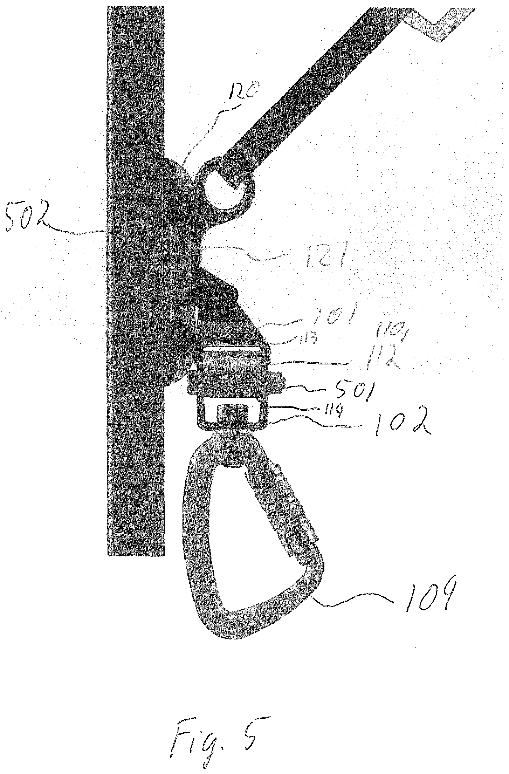

Das erste Befestigungselement 101 ist beispielsweise über einen Hebel 121 mit der Sicherungsvorrichtung 120 verbunden. Ferner ist das erste Befestigungselement 101 wie in Fig. 1 dargestellt mit dem zweiten Befestigungselement 102 gekoppelt. Die Kopplung wird mittels einer Klemmverbindung realisiert, wie in den Figuren 5-8 dargestellt. An dem zweiten Befestigungselement 102 kann die Person befestigt werden. Beispielsweise kann ein Kopplungselement 104, wie beispielsweise ein weiterer Hebel mit einer Befestigungsöse, an einem Sitzgurt der Person befestigt werden. Somit wird über die Befestigungsvorrichtung 100 eine Befestigung zwischen der zu sichernden Person und der Sicherungsvorrichtung 120 bereitgestellt.

Die Abfangeinrichtung 110 kann beispielsweise als Federelement und/oder als Dämpfungsband 112 ausgebildet werden.

Das Dämpfungsband 112 weist einen ersten Abschnitt 113 auf, welcher mit dem ersten Befestigungselement 101 befestigt ist und einen zweiten Abschnitt 114, welcher mit dem zweiten Befestigungselement 102 verbunden ist. Der erste Abschnitt 113 ist beispielsweise an eine Befestigungsöffnung im ersten Befestigungselement 101 zur Befestigung koppelbar. Der zweite Abschnitt 114 ist beispielsweise an eine weitere Befestigungsöffnung im zweiten Befestigungselement 102 zur Befestigung koppelbar. Ferner können die entsprechenden Abschnitte 113, 114 an den entsprechenden Befestigungselementen 101, 102 angeklebt, angeschweißt oder angenäht sein. Bereiche des ersten Abschnitts 113 und des zweiten Abschnitts 114 sind, wie in Fig. 1 dargestellt, miteinander entlang deren Länge entlang eines Verbindungsabschnitts miteinander verbunden (z.B. verklebt oder vernäht), so dass im Falle der Kraftübertragung der Zugkraft über die Abfangeinrichtung 112 eine Fallgeschwindigkeit eines Falls der Person kontinuierlich reduziert bzw. verzögert wird, indem die Verbindung zwischen dem ersten Abschnitt 113 und dem zweiten Abschnitt 114 entlang des Verbindungsabschnitts kontinuierlich, d.h. über einen bestimmten Zeitraum, voneinander gelöst wird.

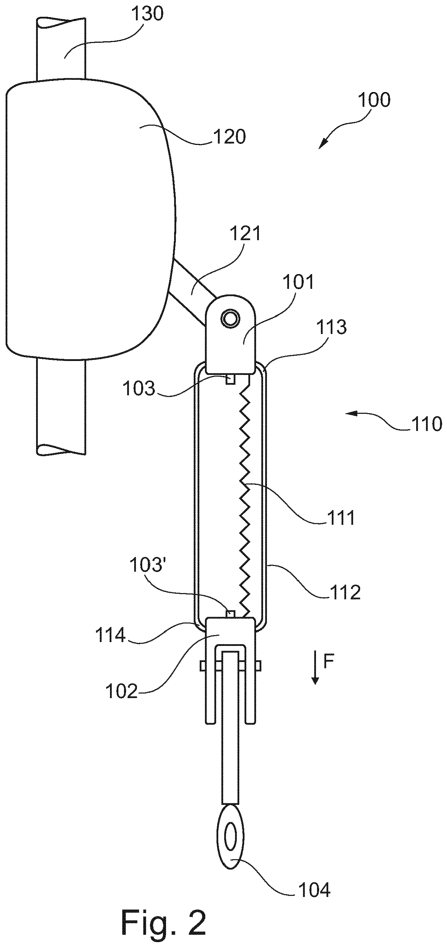

**Fig. 2** zeigt ein nicht von der Erfindung beanspruchtes System 100, welches dieselben Merkmale des Systems 100 wie in Fig. 1 aufweist. Im Unterschied zu Fig. 1 ist das System 100 in Fig. 2 in einem Zustand dargestellt, in welchem die Zugkraft über die Abfangeinrichtung 110 übertragen wird.

Nach Überschreiten eines vorbestimmten Betrags der Auslösekraft F wird das erste Befestigungselement 101 von dem zweiten Befestigungselement 102 entkoppelt. Beispielsweise geschieht dies, indem eine Sollbruchstelle zwischen dem ersten Befestigungselement 101 und dem zweiten Befestigungselement 102 reißt, wenn der vorbestimmte Betrag der Auslösekraft F überschritten wird. Wie in Fig. 2 dargestellt ist der Verbindungsbolzen 103, 103' in zwei Teile getrennt, da zwischen diesen Bereichen 103, 103' eine Sollbruchstelle eingearbeitet ist. Nach dem Entkoppeln des ersten Befestigungselements 101 von dem zweiten Befestigungselement 102 wird die gesamte Zugkraft über die Abfangeinrichtung 110 übertragen. Wie in Fig. 2 dargestellt wird die Zugkraft beispielsweise über das Federelement 111 und/oder über das Dämpfungsband 112 übertragen. In Fig. 2 ist die Stellung der Abfangeinrichtung 110 in einem Zustand dargestellt, in welchem der Fall der Person bereits abgefangen wurde. Wie in Fig. 2 dargestellt ist die Verbindung (z.B. die Klebeverbindung) zwischen dem ersten Abschnitt 113 und dem zweiten Abschnitt 114 des Dämpfungsbands 112 vollständig gelöst. Ferner ist das Federelement 111 in einem ausgedehnten Zustand dargestellt. Der Fall bzw. die Fallgeschwindigkeit der zu sichernden Person wurde zwischen den Zustand des Systems 100 in Fig. 1 und dem Zustand des Systems 100 in Fig. 2 langsam und kontinuierlich abgefangen, ohne dass eine abrupte Fallunterbrechung entstanden ist. Damit können bei einem Auffangen eines Falls einer zu sichernden Person Verletzungen der Person vermieden werden.

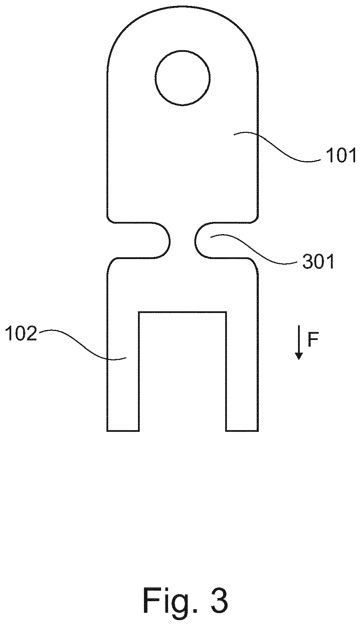

**Fig. 3** zeigt eine nicht von der Erfindung umfasste Ausführungsform der Befestigungseinrichtung, wobei das erste Befestigungselement 101 und das zweite Befestigungselement 102 integral und einstückig ausgebildet sind. Zwischen dem ersten
Befestigungselement 101 und dem zweiten Befestigungselement 102 ist eine Sollbruchstelle 301 ausgebildet. Die Sollbruchstelle 301 ist derart ausgelegt, dass bei einem vorbestimmten Betrag der Auslösekraft F eine Entkopplung zwischen dem ersten Befestigungselement 101 und dem zweiten Befestigungselement 102 entsteht. Die Sollbruchstelle 301 kann beispielsweise durch eine in Fig. 3 dargestellte Einschnürung des Materials der Befestigungseinrichtung umgesetzt werden. Andererseits kann zwischen dem ersten Befestigungselement 101 und dem zweiten Befestigungselement 102 ein weicheres Material eingesetzt werden, welches bei dem vorbestimmten Betrag der Auslösekraft F reißt. Ein solches weicheres Material zwischen den entsprechenden Befestigungselementen 101, 102 kann beispielsweise mittels partiellen Härtens bzw. Formpressens oder mittels einer Klebeverbindung umgesetzt werden.

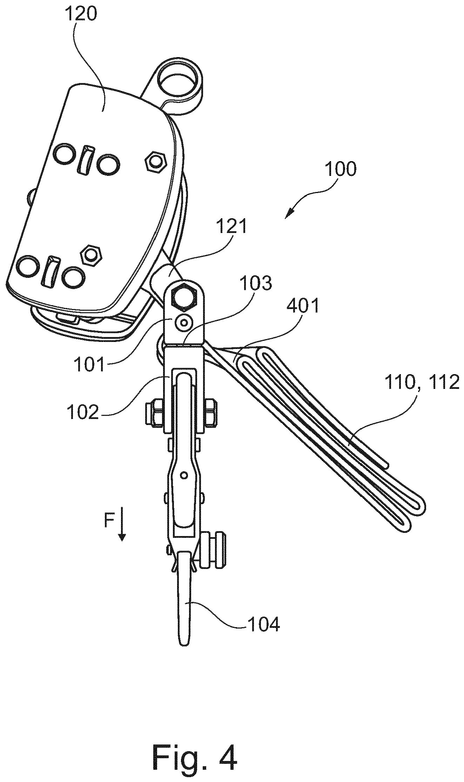

**Fig. 4** zeigt eine perspektivische Ausführungsform des Systems 100 zum Abfangen eines Falls einer zu sichernden Person aus Fig. 1. Zudem zeigt Fig. 4 die Abfangeinrichtung 110, welche als Dämpfungsband 112 ausgebildet ist. Das Dämpfungsband 112 ist mittels einer Schutzhülle 401 umhüllt, um im regulären Betrieb eine Verschmutzung und eine Beschädigung des Dämpfungsbandes 112 bzw. der Abfangeinrichtung 110 zu verhindern. Die Schutzhülle 401 ist derart ausgebildet, dass bei Übertragung der Zugkraft mittels des Dämpfungsbandes 112 die Schutzhülle 401 reißt und das Dämpfungsband 112 freigegeben wird.

**Fig. 5** bis **Fig. 8** zeigen eine weitere beispielhafte Ausführungsform des Systems 100, bei welchem das erste Befestigungselement 101 und das zweite Befestigungselement 102 mittels einer Klemmverbindung gekoppelt sind.

In Fig. 5 bis Fig. 8 ist die Sicherungsvorrichtung 120 dargestellt, welche entlang einer Laufschiene 502 verfahrbar angeordnet ist. Die Befestigungseinrichtung ist an der Sicherungsvorrichtung 120 befestigt und weist das erstes Befestigungselement 101, welches mit der Sicherungsvorrichtung 120 befestigt ist, und das zweites Befestigungselement 102 auf, an welchem die Person, z.B. über das Kopplungselement 104, befestigbar ist.

An dem ersten Befestigungselement 101 und dem zweiten Befestigungselement 102 ist die Abfangeinrichtung 110 befestigt. Die Abfangeinrichtung 110 ist in der beispielhaften Ausführungsform in Fig. 5 bis Fig. 8 beispielhaft als Dämpfungsband 112 ausgebildet. Das Dämpfungsband 112 verläuft mit einem ersten Abschnitt 113 durch eine Öffnung in dem ersten Befestigungselement 101 und mit einem zweiten Abschnitt 114 um einen Klemmbolzen 501, welcher an dem zweiten Befestigungselement 501 befestigt ist.

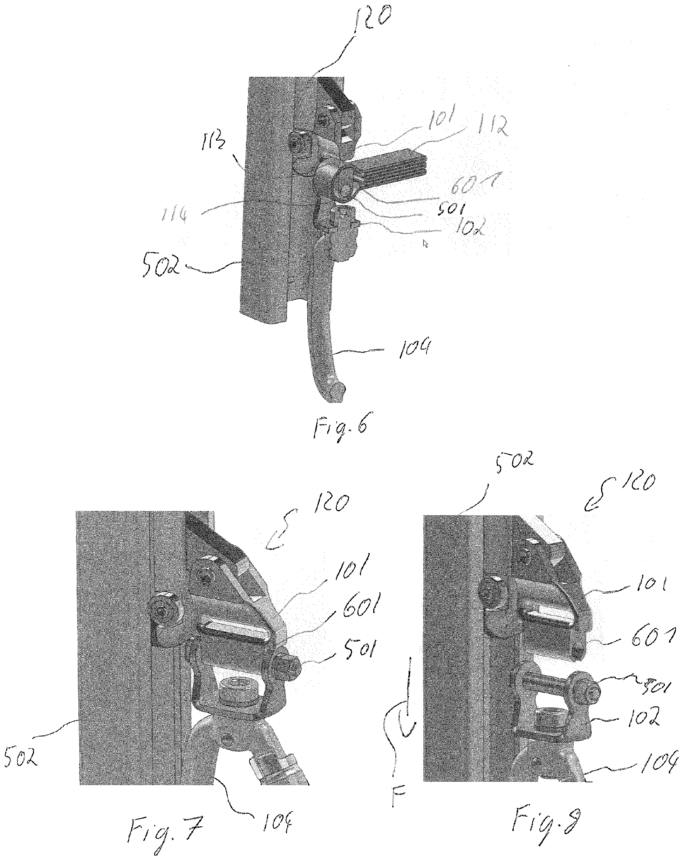

Das erste Befestigungselement 101 weist einen gabelförmigen Abschnitt 601 auf (siehe Fig. 6). Der gabelförmige Abschnitt 601 des ersten Befestigungselements 101 weist die Form einer Hülse auf, wobei entlang der Längsachse der Hülse ein Spalt den gabelförmigen Abschnitt 601 in eine erste Teilschale und in eine zweite Teilschale trennt. Aufgrund des Spalts weist der gabelförmige Abschnitt 601 ein offenes Profil auf. Im Inneren des gabelförmigen Abschnitts 601 ist der Klemmbolzen 501 eingeklemmt, um die Klemmverbindung bereitzustellen (siehe Fig. 6, Fig. 7). Bei Überschreiten des vorbestimmten Betrags der Auslösekraft F verformt sich der gabelförmige Abschnitt 601 derart, dass der gabelförmige Abschnitt 601 aufgrund der Zugkraft (Auslösekraft F) des Klemmbolzens 501 aufgebogen wird, d.h. dass sich die erste Teilschale von der zweiten Teilschale entfernt, bis der Spalt derart groß ist, dass der Klemmbolzen 501 durch den Spalt aus dem gabelförmige Abschnitt 601 herausrutscht (siehe Fig. 8). Der Klemmbolzen 501 ist dann von dem gabelförmigen Abschnitt 601 entkoppelt. Entsprechend ist dann das erste Befestigungselement 101 von dem zweiten Befestigungselement 102 entkoppelt.

Der Klemmbolzen 501 kann beispielsweise lösbar und somit austauschbar an dem zweiten Befestigungselement 102 angeordnet sein. Wie in Fig. 5 dargestellt, kann der Klemmbolzen 501 als Schraubbolzen ausgebildet sein und mittels einer Gewindemutter an das zweite Befestigungselement 102 lösbar befestigt werden.

Die Abfangeinrichtung 110 bzw. das Dämpfungsband 112 kann dabei einerseits an den gabelförmigen Abschnitt 601 und andererseits an den Klemmbolzen 501 gekoppelt werden. Nach Entkopplung des Klemmbolzens 501 aus dem gabelförmigen Abschnitt 601 findet eine Kraftübertragung zwischen dem Klemmbolzen 501 und dem gabelförmigen Abschnitt 601 ausschließlich über die Abfangeinrichtung 110 statt. Zur besseren Übersicht ist die Abfangeinrichtung 110 bzw. das Dämpfungsband 112 in Fig. 7 und Fig. 8 nicht dargestellt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden ist, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste:

- 100: System
- 101: erstes Befestigungselement
- 102: zweites Befestigungselement
- 103: Verbindungsbolzen
- 104: Kopplungselement

- 110: Abfangeinrichtung
- 111: Federelement
- 112: Dämpfungsband
- 113: erster Abschnitt
- 114: zweiter Abschnitt

- 120: Sicherungsvorrichtung
- 121: Hebel

- 130: Halteseil

- 301: Sollbruchstelle

- 401: Schutzhülle

- 501: Klemmbolzen
- 502: Laufschiene

- 601: gabelförmiger Abschnitt

- F: Auslösekraft

## Patentansprüche

1. System (100) zum Abfangen eines Falls einer zu sichernden Person, das System (100) aufweisend
eine Befestigungseinrichtung zum Befestigen der Person an einer Sicherungsvorrichtung (120), wobei die Sicherungsvorrichtung (120) an einem langgestreckten Sicherungsmittel zum Sichern der Person anbringbar ist,
wobei die Befestigungseinrichtung ein erstes Befestigungselement (101), welches mit der Sicherungsvorrichtung (120) befestigbar ist, und ein zweites Befestigungselement (102), an welchem die Person befestigbar ist, aufweist, wobei das erste Befestigungselement (101) mit dem zweiten Befestigungselement (102) derart gekoppelt ist, dass eine Zugkraft direkt zwischen dem ersten Befestigungselement (101) und dem zweiten Befestigungselement (102) übertragbar ist, und
eine Abfangeinrichtung (110) zum kontinuierlichen Verzögern einer Fallgeschwindigkeit eines Falls der Person,
wobei die Abfangeinrichtung (110) an dem ersten Befestigungselement (101) und dem zweiten Befestigungselement (102) befestigt ist,
wobei die Befestigungseinrichtung derart ausgebildet ist, dass bei Überschreiten eines vorbestimmten Betrags einer Auslösekraft (F) das erste Befestigungselement (101) von dem zweiten Befestigungselement (102) entkoppelbar ist und die Zugkraft zwischen dem ersten Befestigungselement (101) und dem zweiten Befestigungselement (102) von der Abfangeinrichtung (110) übertragbar ist, um einen Fall der Person kontinuierlich abzufangen, **dadurch gekennzeichnet, dass** das erste Befestigungselement (101) und das zweite Befestigungselement (102) mittels einer Klemmverbindung derart miteinander gekoppelt sind, dass bei Überschreiten des vorbestimmten Betrags der Auslösekraft (F) das erste Befestigungselement (101) von dem zweiten Befestigungselement (102) entkoppelt.

2. System (100) gemäß Anspruch 1,
wobei das erste Befestigungselement (101) und das zweite Befestigungselement (102) integral ausgebildet sind,
wobei zwischen dem ersten Befestigungselement (101) und dem zweiten Befestigungselement (102) eine Sollbruchstelle (301) derart ausgebildet ist, dass bei Überschreiten des vorbestimmten Betrags der Auslösekraft (F) das erste Befestigungselement (101) von dem zweiten Befestigungselement (102) lösbar ist.

3. System (100) gemäß Anspruch 1 oder 2,
wobei die Befestigungseinrichtung einen Verbindungsbolzen (103) mit einem ersten Ende und einem gegenüberliegendem zweiten Ende aufweist,
wobei das erste Ende mit dem ersten Befestigungselement (101) gekoppelt ist und das zweite Ende mit dem zweiten Befestigungselement (102) gekoppelt ist, und
wobei bei Überschreiten des vorbestimmten Betrags der Auslösekraft (F) der Verbindungsbolzen (103) von zumindest dem ersten Befestigungselement (101) oder dem zweiten Befestigungselement (102) lösbar ist.

4. System (100) gemäß Anspruch 1 oder 2,
wobei die Befestigungseinrichtung einen Verbindungsbolzen (103) mit einer ersten Ende und einem gegenüberliegendem zweiten Ende aufweist,
wobei das erste Ende mit dem ersten Befestigungselement (101) gekoppelt ist und das zweite Ende mit dem zweiten Befestigungselement (102) gekoppelt ist, und
wobei der Verbindungsbolzen (103) eine weitere Sollbruchstelle aufweist, welche derart ausgebildet ist, dass bei Überschreiten des vorbestimmten Betrags der Auslösekraft (F) das erste Befestigungselement (101) von dem zweiten Befestigungselement (102) lösbar ist.

5. System (100) gemäß einem der Ansprüche 1 bis 4,
wobei das erste Befestigungselement (101) oder das zweite Befestigungselement (102) einen gabelförmigen Abschnitt (601) aufweist,
wobei das entsprechend andere erste Befestigungselement (101) oder zweite Befestigungselement (102) einen Klemmbolzen (501) aufweist,
wobei der Klemmbolzen (501) zur Ausbildung der Klemmverbindung in dem gabelförmigen Abschnitt (601) einklemmbar ist.

6. System (100) gemäß einem der Ansprüche 1 bis 5,
wobei die Abfangeinrichtung (110) ein elastisches Element aufweist.

7. System (100) gemäß einem der Ansprüche 1 bis 6,
wobei die Abfangeinrichtung (110) ein plastisch verformbares Element aufweist.

8. System (100) gemäß einem der Ansprüche 1 bis 7,
wobei die Abfangeinrichtung (110) ein Dämpfungsband (112) mit einem ersten Abschnitt (113) und mit einem zweiten Abschnitt (114) aufweist,
wobei der erste Abschnitt (113) mit dem ersten Befestigungselement (101) gekoppelt ist und der zweite Abschnitt (114) mit dem zweiten Befestigungselement (102) gekoppelt ist,
wobei der erste Abschnitt (113) mit dem zweiten Abschnitt (114) entlang eines Verbindungsabschnitts derart befestigt ist, dass bei Übertragung der Zugkraft mittels des Dämpfungsbandes (112) die Befestigung entlang des Verbindungsabschnitts kontinuierlich lösbar ist, so dass ein Fall der Person kontinuierlich abgefangen wird.

9. System (100) gemäß Anspruch 8,
wobei die Abfangeinrichtung (110) eine Schutzhülle (401) aufweist, welche das Dämpfungsband (112) einhüllt,
wobei die Schutzhülle (401) bei Übertragung der Zugkraft mittels des Dämpfungsbandes (112) reißt und das Dämpfungsband (112) freigibt.

10. Anordnung zum Abfangen eines Falls einer zu sichernden Person, die Anordnung aufweisend
ein System (100) gemäß einem der Ansprüche 1 bis 9, und
eine Sicherungsvorrichtung (120), welche an einem langgestreckten Sicherungsmittel zum Sichern der Person anbringbar ist,
wobei das erste Befestigungselement (101) der Befestigungseinrichtung des Systems (100) an der Sicherungsvorrichtung (120) befestigt ist.

11. Verfahren zum Abfangen eines Falls einer zu sichernden Person, das Verfahren aufweisend
Übertragen einer Zugkraft direkt zwischen einem ersten Befestigungselement (101) und einem zweiten Befestigungselement (102) einer Befestigungseinrichtung,
wobei das erste Befestigungselement (101) mit einer Sicherungsvorrichtung (120), welche an einem langgestreckten Sicherungsmittel zum Sichern der Person anbringbar ist, befestigbar ist und das zweite Befestigungselement (102) mit der Person befestigbar ist,
Entkoppeln des ersten Befestigungselements (101) von dem zweiten Befestigungselement (102), wenn ein vorbestimmter Betrag einer Auslösekraft (F) überschritten wird.
wobei das erste Befestigungselement (101) und das zweite Befestigungselement (102) mittels einer Klemmverbindung derart miteinander gekoppelt werden, dass bei Überschreiten des vorbestimmten Betrags der Auslösekraft (F) das erste Befestigungselement (101) von dem zweiten Befestigungselement (102) entkoppelt, und
Übertragen der Zugkraft zwischen dem ersten Befestigungselement (101) und dem zweiten Befestigungselement (102) über eine Abfangeinrichtung (110), wenn der vorbestimmte Betrag der Auslösekraft (F) überschritten wurde, um eine Fallgeschwindigkeit eines Falls der Person kontinuierlich zu verzögern.

## Claims

1. System (100) for catching a fall of a person to be secured, the system (100) comprising
an attachment unit for attaching the person to a safety device (120), wherein the safety device (120) is attachable to an elongated safety means for securing the person,
wherein the attachment unit comprises
a first attachment element (101) which is attachable to the safety device (120), and
a second attachment element (102) at which the person is attachable, wherein the first attachment element (101) is coupled to the second attachment element (102) such that a tensile force is directly transferable between the first attachment element (101) and the second attachment element (102), and
a catching unit (110) for continuously decelerating a falling velocity of a fall of the person,
wherein the catching unit (110) is attached to the first attachment element (101) and to the second attachment element (102),
wherein the attachment unit is configured such that, when a predetermined amount of an actuation force (F) is exceeded, the first attachment element (101) is decoupleable from the second attachment element (102) and the tensile force between the first attachment element (101) and the second attachment element (102) is transferable by the catching unit (110), in order to continuously catch a fall of the person,
**characterized in that**
the first attachment element (101) and the second attachment element (102) are coupled with each other by means of a clamping connection, such that, when the predetermined amount of the actuation force (F) is exceeded, the first attachment element (101) is decoupled from the second attachment element (102).

2. System (100) according to claim 1,
wherein the first attachment element (101) and the second attachment element (102) are integrally formed,
wherein between the first attachment element (101) and the second attachment element (102) a predetermined breaking point (301) is formed, such that, when the predetermined amount of the actuation force (F) is exceeded, the first attachment element (101) is releasable from the second attachment element (102).

3. System (100) according to claim 1 or 2,
wherein the attachment unit comprises a connecting bolt (103) with a first end and an opposing second end,
wherein the first end is coupled with the first attachment element (101) and the second end is coupled with the second attachment element (102), and
wherein, when the predetermined amount of the actuation force (F) is exceeded, the connecting bolt (103) is releasable from at least the first attachment element (101) or the second attachment element (102).

4. System (100) according to claim 1 or 2,
wherein the attachment unit comprises a connecting bolt (103) with a first end and an opposing second end,
wherein the first end is coupled with the first attachment element (101) and the second end is coupled with the second attachment element (102), and
wherein the connecting bolt (103) comprises a further predetermined breaking point which is formed such that, when the predetermined amount of the actuation force (F) is exceeded, the first attachment element (101) is releasable from the second attachment element (102).

5. System (100) according to one of the claims 1 to 4,
wherein the first attachment element (101) or the second attachment element (102) comprises a bifurcated section (601),
wherein the respective other first attachment element (101) or second attachment element (102) comprises a clamping bolt (501),
wherein the clamping bolt (501) is clampable in the bifurcated section (601) for forming the clamping connection.

6. System (100) according to one of the claims 1 to 5,
wherein the catching unit (110) comprises an elastic element.

7. System (100) according to one of the claims 1 to 6,
wherein the catching unit (110) comprises a plastically deformable element.

8. System (100) according to one of the claims 1 to 7,
wherein the catching unit (110) comprises a damping band (112) with a first section (113) and with a second section (114),
wherein the first section (113) is coupled with the first attachment element (101) and the second section (114) is coupled with the second attachment element (102),
wherein the first section (113) is attached along a connection section, such that, when the tensile force is transferred by means of the damping band (112), the attachment along the connection section is continuously releasable, such that a fall of the person is continuously caught.

9. System (100) according to claim 8,
wherein the catching unit (110) comprises a protective sheath (401) which is enveloping the damping band (112),
wherein the protective sheath (401) ruptures when the tensile force is transferred by means of the damping band (112) and releases the damping band (112).

10. Arrangement for capturing a fall of a person to be secured, the arrangement comprising
a system (100) according to one of the claims 1 to 9, and
a safety device (120) which is attachable to an elongated safety means for securing the person,
wherein the first attachment element (101) of the attachment unit of the system (100) is attached to the safety device (120).

11. Method for catching a fall of a person to be secured, the method comprising
transferring a tensile force directly between a first attachment element (101) and a second attachment element (102) of an attachment unit,
wherein the first attachment element (101) is attachable to a safety device (120) which is attachable to an elongated safety means for securing the person, and the second attachment element (102) is attachable to the person,
decoupling the first attachment element (101) from the second attachment element (102), when a predetermined amount of an actuation force (F) is exceeded,
wherein the first attachment element (101) and the second attachment element (102) are coupled with each other by means of a clamping connection, such that, when the predetermined amount of the actuation force (F) is exceeded, the first attachment element (101) decouples from the second attachment element (102), and
transferring the tensile force between the first attachment element (101) and the second attachment element (102) via a catching unit (110), when the predetermined amount of the actuation force (F) was exceeded, in order to continuously decelerate the falling velocity of a fall of the person.

## Revendications

1. Système (100) d'amortissement d'une chute d'une personne à sécuriser, le système (100) présentant
un équipement de fixation pour fixer la personne à un dispositif de sécurisation (120), le dispositif de sécurisation (120) pouvant être monté au niveau d'un moyen de sécurisation allongé pour sécuriser la personne,
l'équipement de fixation présentant un premier élément de fixation (101), lequel peut être fixé au dispositif de sécurisation (120), et un deuxième élément de fixation (102), auquel la personne peut être fixée,
le premier élément de fixation (101) étant couplé au deuxième élément de fixation (102) de telle sorte qu'une force de traction puisse être transmise directement entre le premier élément de fixation (101) et le deuxième élément de fixation (102), et
un équipement d'amortissement (110) pour la décélération continue d'une vitesse de chute d'une chute de la personne,
l'équipement d'amortissement (110) étant fixé au premier élément de fixation (101) et au deuxième élément de fixation (102),
l'équipement de fixation étant réalisé de telle sorte qu'en cas de dépassement d'une valeur prédéterminée d'une force de déclenchement (F), le premier élément de fixation (101) peut être découplé du deuxième élément de fixation (102) et la force de traction peut être transmise entre le premier élément de fixation (101) et le deuxième élément de fixation (102) par l'équipement d'amortissement (110) pour amortir en continu une chute de la personne,
**caractérisé en ce que**
le premier élément de fixation (101) et le deuxième élément de fixation (102) sont couplés l'un à l'autre au moyen d'une liaison par serrage de telle sorte qu'en cas de dépassement de la valeur prédéterminée de la force de déclenchement (F), le premier élément de fixation (101) est découplé du deuxième élément de fixation (102).

2. Système (100) selon la revendication 1,
**caractérisé en ce que** le premier élément de fixation (101) et le deuxième élément de fixation (102) sont réalisés en une pièce,
un point de rupture (301) étant réalisé entre le premier élément de fixation (101) et le deuxième élément de fixation (102) de telle sorte qu'en cas de dépassement de la valeur prédéterminée de la force de déclenchement (F), le premier élément de fixation (101) est amovible du deuxième élément de fixation (102).

3. Système (100) selon la revendication 1 ou 2,
**caractérisé en ce que** l'équipement de fixation présente un boulon de liaison (103) avec une première extrémité et une deuxième extrémité opposée,
la première extrémité étant couplée au premier élément de fixation (101) et la deuxième extrémité étant couplée au deuxième élément de fixation (102), et
en cas de dépassement de la valeur prédéterminée de la force de déclenchement (F), le boulon de liaison (103) étant amovible au moins du premier élément de fixation (101) ou du deuxième élément de fixation (102).

4. Système (100) selon la revendication 1 ou 2,
**caractérisé en ce que** l'équipement de fixation présente un boulon de liaison (103) avec une première extrémité et une deuxième extrémité opposée,
la première extrémité étant couplée au premier élément de fixation (101) et la deuxième extrémité étant couplée au deuxième élément de fixation (102), et
le boulon de liaison (103) présentant un autre point de rupture, lequel est réalisé de telle sorte qu'en cas de dépassement de la valeur prédéterminée de la force de déclenchement (F), le premier élément de fixation (101) est amovible du deuxième élément de fixation (102).

5. Système (100) selon l'une quelconque des revendications 1 à 4,
**caractérisé en ce que** le premier élément de fixation (101) ou le deuxième élément de fixation (102) présente une section en forme de fourche (601),
l'autre premier élément de fixation (101) ou deuxième élément de fixation (102) correspondant présentant un boulon de serrage (501),
le boulon de serrage (501) pouvant être serré dans la section en forme de fourche (601) pour la réalisation de la liaison par serrage.

6. Système (100) selon l'une quelconque des revendications 1 à 5,
**caractérisé en ce que** l'équipement d'amortissement (110) présente un élément élastique.

7. Système (100) selon l'une quelconque des revendications 1 à 6,
**caractérisé en ce que** l'équipement d'amortissement (110) présente un élément plastiquement déformable.

8. Système (100) selon l'une quelconque des revendications 1 à 7,
**caractérisé en ce que** l'équipement d'amortissement (110) présente une bande de ralentissement (112) avec une première section (113) et avec une deuxième section (114),
la première section (113) étant couplée avec le premier élément de fixation (101) et la deuxième section (114) étant couplée avec le deuxième élément de fixation (102),
la première section (113) étant fixée à la deuxième section (114) le long d'une section de liaison de telle sorte que lors de la transmission de la force de traction au moyen de la bande de ralentissement (112), la fixation est amovible en continu le long de la section de liaison de sorte qu'une chute de la personne soit amortie en continu.

9. Système (100) selon la revendication 8,
**caractérisé en ce que** l'équipement d'amortissement (110) présente une enveloppe de protection (401), laquelle enveloppe la bande de ralentissement (112),
l'enveloppe de protection (401) se rompant lors de la transmission de la force de traction au moyen de la bande de ralentissement (112) et libérant la bande de ralentissement (112).

10. Ensemble d'amortissement d'une chute d'une personne à sécuriser, l'ensemble présentant
un système (100) selon l'une quelconque des revendications 1 à 9, et
un dispositif de sécurisation (120), lequel peut être monté au niveau d'un moyen de sécurisation allongé pour sécuriser la personne,
**caractérisé en ce que** le premier élément de fixation (101) de l'équipement de fixation du système (100) est fixé au dispositif de sécurisation (120).

11. Procédé d'amortissement d'une chute d'une personne à sécuriser, **caractérisé en ce que** le procédé présente
la transmission d'une force de traction directement entre un premier élément de fixation (101) et un deuxième élément de fixation (102) d'un équipement de fixation,
le premier élément de fixation (101) pouvant être fixé à un dispositif de sécurisation (120), lequel peut être monté au niveau d'un moyen de sécurisation allongé pour sécuriser la personne, et le deuxième élément de fixation (102) pouvant être fixé à la personne,
le découplage du premier élément de fixation (101) du deuxième élément de fixation (102), lorsqu'une valeur prédéterminée d'une force de déclenchement (F) est dépassée,
le premier élément de fixation (101) et le deuxième élément de fixation (102) étant couplés l'un à l'autre au moyen d'une liaison par serrage de telle sorte qu'en cas de dépassement de la valeur prédéterminée de la force de déclenchement (F), le premier élément de fixation (101) est découplé du deuxième élément de fixation (102), et
la transmission de la force de traction entre le premier élément de fixation (101) et le deuxième élément de fixation (102) par le biais d'un équipement d'amortissement (110), lorsque la valeur prédéterminée de la force de déclenchement (F) a été dépassée, pour décélérer en continu une vitesse de chute d'une chute de la personne.
